# EUROPEAN PATENT SPECIFICATION

(11) **EP 3 866 427 B1**
(45) Date of publication and mention of the grant of the patent: **28.01.2026**
(21) Application number: 19906425.4
(22) Date of filing: 10.12.2019
(51) Int. Cl.: H04L 9/40, H04L 69/24, H04W 12/03, H04W 12/0431

(54) **TRANSMISSION METHOD AND DEVICE, PACKET TRANSMITTING TERMINAL AND RECEIVING TERMINAL**
ÜBERTRAGUNGSVERFAHREN UND -VORRICHTUNG, PAKET SENDENDES ENDGERÄT UND EMPFANGENDES ENDGERÄT
PROCÉDÉ ET DISPOSITIF DE TRANSMISSION, TERMINAL D'ÉMISSION DE PAQUETS ET TERMINAL DE RÉCEPTION

(30) Priority: 24.12.2018 CN 201811584907
(43) Date of publication of application: 18.08.2021
(73) Proprietor: ZTE Corporation, Shenzhen, Guangdong 518057 (CN)
(72) Inventor: LI, Rui, Shenzhen, Guangdong 518057 (CN); ZHOU, Libing, Shenzhen, Guangdong 518057 (CN); LIAO, Junfeng, Shenzhen, Guangdong 518057 (CN)
(74) Representative: Canzler & Bergmeier Patentanwälte Partnerschaft mbB
(86) International application number: PCT/CN2019/124216
(87) International publication number: WO 2020/135011

(56) References cited:
- CN-A- 102 098 207
- CN-A- 102 437 931
- CN-A- 105 591 926
- CN-A- 105 812 322
- CN-A- 105 812 322
- CN-B- 102 098 207
- US-A1- 2016 142 290
- ZOLT�N FAIGL: "Psec, IKEv2 and their use in Mobile IPv6", INTERNET CITATION, 1 June 2007 (2007-06-01), pages 1 - 42, XP002578342, Retrieved from the Internet <URL:http://mcl.hu/~szlaj/IPsec_IKEv2_in_MIPv6.pdf> [retrieved on 20100416]

## Description

### TECHNICAL FIELD

The embodiments of the present disclosure relate to, but are not limited to, the field of communication technology.

### BACKGROUND

With the development of the Internet and mobile communication, various network security problems have arisen. Network security has become a concern of every user, government, network service provider and device manufacturer, and the capability to guarantee network security has become one of the basic capabilities that each company should have.

So far the development of network security has produced relatively mature frameworks and theories and involved many scenarios and methods, such as cryptography, infrastructure security, access control, authentication management, transmission security, and sensitive data protection. The transmission security is a main technology for ensuring confidentiality and integrity of data transmission in an untrusted network environment, and the representative techniques of transmission security include Secure Socket Layer/Transport Layer Security (SSL/TLS), Internet Protocol Security (IPSec), etc. The IPSec can solve security problems of network layer and thus is recommended as a secure transmission protocol (3GPP TS33.310) between a base station and a core network by standard organizations such as the 3rd Generation Partnership Project (3GPP).

Radio Access Network (RAN) is a very important component in wireless communication. With the coming of the fifth generation (5G) network, the current network security protocols such as the IPSec are facing tremendous challenges.

At present, user plane data from a base station to a core network are generally carried in the same IPSec security tunnel, and the processing capacity of an encryption chip is limited, so that the encryption requirements of 5G high-flow services cannot be met.

The Chinese Patent CN 102098207 B discloses a method that includes transmitting a differentiated services code point (DSCP) priority value of a start node to a response node; receiving response node DSCP priority value information, matched with the DSCP priority value of the start node, fed back by the response node; acquiring security association (SA) associated with the response node according to the response node DSCP priority value information; and establishing the IPSec channel with the response node by utilizing the SA. The method solves the problem of packet loss caused by using the same SA in the application of different DSCP priority values and improves the quality of security (QoS) of a network.

The Chinese Patent CN 105812322 B discloses a method for establishing an Internet security protocol security alliance, which can realize that the operator provides the IP spaces which can be independently programmed to various logic devices on the basis of the VRF identifier, provides a fully isolate IPSec protection function and realizes the flow distinguishing between various companies. Besides, one IP address is adopted to protect the flows of multiple companies in order to save the IP address source of the public network.

The Document ZOLTAN FAIGL "IPsec, IKEv2 and their use in Mobile IPv6", filed on INTERNET CITATION 1 June 2007, pages 1-42, XP002578342, discloses the operation of Internet Security Protocol (IPsec) and Internet Key Exchange Protocol version 2 (IKEv2), and especially, describes their use when protecting Mobile IPv6 (MIPv6) signaling. IPsec and IKEv2 can basically be used in the same way, with any other signaling protocol or data, which they protect. However, it is the security policies and configurations which will vary in function of the information sensitivity that they protect.

### SUMMARY

A summary of the subject matter described in detail herein is given below, but the summary is not intended to limit the protection scope of the claims.

The embodiments of the present disclosure provide a transmission method, a transmission device, a packet transmitting terminal, and a packet receiving terminal.

The invention is set out in the appended set of claims.

### BRIEF DESCRIPTION OF THE DRAWINGS

Fig. 1 is a schematic diagram of a typical network when a base station starts up an IPSec function.
Fig. 2 is a schematic diagram illustrating standard IPSec security tunnel negotiation.
Fig. 3 is a flowchart illustrating a transmission method (applied to a packet transmitting terminal) according to the present disclosure.
Fig. 4 is a flowchart illustrating a transmission method (applied to a packet transmitting terminal) according to the present disclosure.
Fig. 5 is a flowchart of step 301 according to the present disclosure.
Fig. 6 is a flowchart of step 302 according to the present disclosure.
Fig. 7 is a flowchart illustrating a transmission method (applied to a packet transmitting terminal) according to the present disclosure.
Fig. 8 is a flowchart illustrating a transmission method according to the present disclosure.
Fig. 9 is a schematic diagram illustrating attribute SA negotiation and packet transmission of an IPSec initiator according to the present disclosure.
Fig. 10 is a schematic diagram illustrating attribute SA negotiation and packet transmission of an IPSec responder according to the present disclosure.
Fig. 11 is a comparison diagram of a conventional IPSec device and an IPSec device equipped with attribute SA negotiation.
Fig. 12 is a flowchart illustrating a transmission method (applied to a packet receiving terminal) according to the present disclosure.
Fig. 13 is a flowchart illustrating a transmission method (applied to a packet receiving terminal) according to the present disclosure.
Fig. 14 is a schematic diagram of a transmission device (applied to a packet transmitting terminal) according to the present disclosure.
Fig. 15 is a schematic diagram of a transmission device (applied to a packet receiving terminal) according to the present disclosure.
Fig. 16 is a schematic diagram of a packet transmitting terminal according to the present disclosure.
Fig. 17 is a schematic diagram of a packet receiving terminal according to the present disclosure.

### DETAILED DESCRIPTION

The embodiments of the present disclosure are described in detail below with reference to the accompanying drawings.

The steps illustrated in the flowcharts of the drawings may be performed in a computer system such as a set of computer-executable instructions. In addition, although a logical order is illustrated in the flowchart, the steps illustrated or described may be performed in an order different from that described herein in some cases.

The IPSec is a protocol cluster, a control negotiation protocol of the IPSec is Internet Key Exchange (IKE), a current main version of the IKE is IKEv2, and a data encapsulation protocol of the IPSec is based on an Encapsulating Security Payload (ESP) protocol. The IKE protocol negotiates a Security Association (SA) based on a five-tuple (a source Internet protocol (IP) address, a destination IP address, a protocol number, a source port, and a destination port), different types of services are assigned to different SAs, and one SA generally corresponds to one IPSec tunnel. The IPSec protocol has been well deployed and operated for a long time.

With the coming of 5G, the IPSec protocol has been gradually unable to meet the requirements of services. The network architecture of a 5G base station is merely slightly different from that of a 4G base station, and adopts flat base stations and core networks, and user plane data are carried in general packet radio service (GPRS) tunneling protocol user plane (GTPU) tunnels from the base stations to the core networks. However, with the downstream flow up to 40Gbps and the upstream flow up to 20Gbps, the flow of a single 5G base station far exceeds that of a 4G base station. In most cases, a base station configures only one user plane IP address, a user plane gateway of a core network corresponding to the base station also has only one IP address, and the user plane data between the base station and the core network have only one five-tuple, that is, the same source IP address, destination IP address, protocol number (UDP, User Datagram Protocol), source port, and destination port. Limited by IPSec sequence numbers (SNs) and a sliding window mechanism (see RFC2406: 3.4.3 Sequence Number Verification), the user plane data from a base station to a core network are carried in the same IPSec security tunnel in most cases according to the current IPSec protocol.

At present, encryption and decryption of data are realized by using internal encryption chips in most IPSec solutions, and all the solutions of the chips to a single security tunnel focus on a single core or a single encryption engine. It is difficult to process the data of the same SA among different cores, different central processing units (CPUs) or different boards, and a single encryption chip has limited processing capacity, which makes it hard to realize high-flow encryption and decryption processing capabilities.

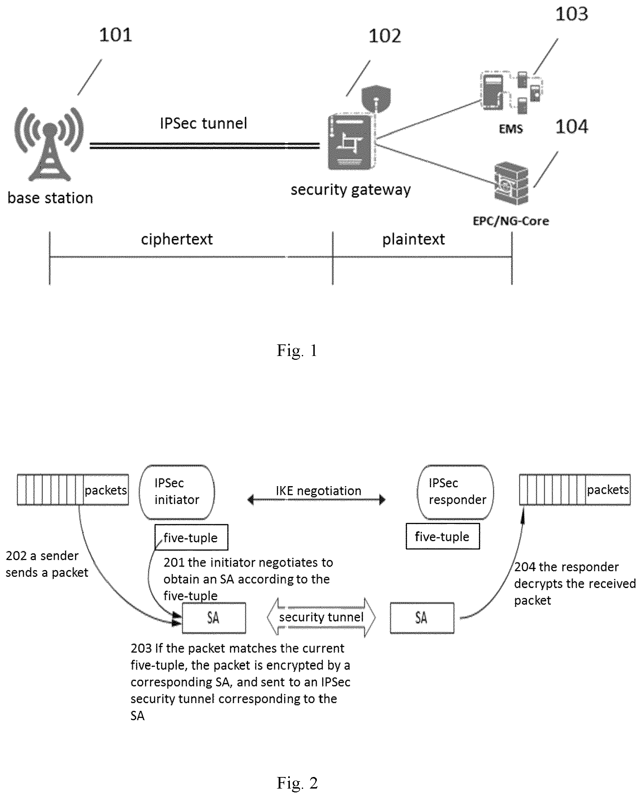

As shown in Fig. 1 which is a schematic diagram of a typical network when a base station starts up an IPSec function, a base station 101 encrypts a packet, and sends the encrypted packet to a security gateway 102 through an IPSec security tunnel, the security gateway 102 decrypts the received encrypted packet, and sends the obtained plaintext to an element management system (EMS) 103, and an evolved packet core (EPC, a 4G core network)/next generation core (NG-Core, a 5G core network) 104.

As shown in Fig. 2, taking an IPSec initiator being a packet transmitting terminal as an example, a standard IPSec security tunnel negotiation includes the following steps 201 to 204.

In the step 201, an IPSec initiator negotiates with an IPSec responder to obtain an SA according to a five-tuple of IKE.

In the step 202, the IPSec initiator receives a to-be-transmitted packet sent by another network element.

In the step 203, the IPSec initiator matches the packet with the current five-tuple, and the packet is encrypted by the corresponding SA, and sent to an IPSec security tunnel corresponding to the SA.

In the step 204, the IPSec responder receives the packet, and decrypts the packet according to an IP address and a matched Security Parameter Index (SPI).

For sending a packet to the IPSec initiator, the IPSec responder can also negotiate with the IPSec initiator for an SA. The negotiation process of the IPSec responder is similar to that shown in Fig. 2 and is not repeated here. That is, a pair of SAs (corresponding to an upstream direction and a downstream direction respectively) is used for packet transmission between the IPSec initiator and the IPSec responder.

The present disclosure put forward a high-traffic and single-tunnel IPSec solution for 5G, etc., which makes some extensions to the IPSec standard protocol under the condition of being compatible with the IPSec standard protocol.

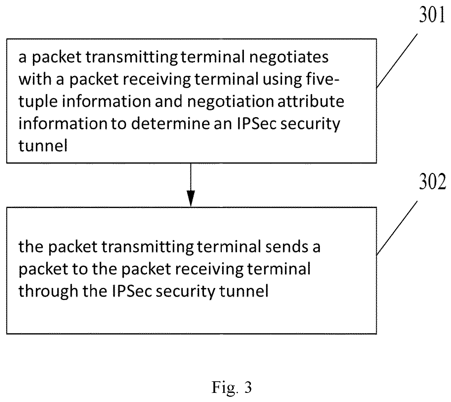

As shown in Fig. 3, a transmission method according to an embodiment of the present disclosure is applied to a packet transmitting terminal, and includes steps 301 and 302.

In the step 301, a packet transmitting terminal negotiates with a packet receiving terminal using five-tuple information and negotiation attribute information to determine an IPSec security tunnel.

The packet transmitting terminal is an IPSec initiator, and the packet receiving terminal is an IPSec responder; or the packet transmitting terminal is an IPSec responder, and the packet receiving terminal is an IPSec initiator.

The IPSec initiator includes, but is not limited to, a hardware device such as a wireless base station (including a 2G base station, a 3G base station, a 4G base station, a 5G base station, etc.) and a set-top box, and may further include a general software module.

The IPSec responder includes, but is not limited to, a security gateway and a wireless base station, and may further include a general software module.

The five-tuple information includes a source IP address, a destination IP address, a protocol number, source port information, and destination port information.

The negotiation attribute information may be related to characteristics of services.

In some implementations, the negotiation attribute information is related to a type of service of a packet, and is configured to distinguish the service information except the five-tuple information. Different negotiation attribute information can be used to negotiate different security tunnels and allocate service data of different packets to different security tunnels.

In some implementations, the negotiation attribute information includes one of the following information: type of service, type of service and length, and type of service, length and value.

The type of service (Type) may be distinguished according to specific services, and may be an enumerated value (e.g. 1, 2, 3...) pre-defined by both the packet transmitting terminal and the packet receiving terminal, or a specific type of service, such as a Differentiated Services Code Point (DSCP), a User Equipment (UE) IP address, and a Tunnel Endpoint Identifier (TEID). The length (Length) is a length of a type-of-service parameter. The value (Value) is a value or range corresponding to the type of service, for example, the Quality of Service (QoS) is in a range of 36 to 46.

In some implementations, before the step 301, the method further includes that the packet transmitting terminal determines to start up an attribute SA negotiation function. It is possible that it is the network administrator who determines to start up the attribute SA negotiation function. The network administrator or packet transmitting terminal can determine to start up the attribute SA negotiation function according to current flow, packet characteristics, etc.

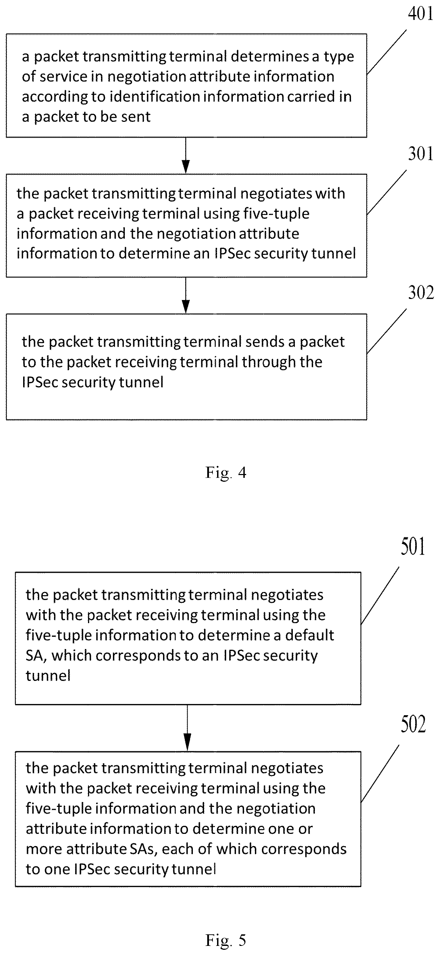

As shown in Fig. 4, in some implementations, the method further includes step 401 before the step 301, the step 401 being that the packet transmitting terminal determines a type of service in the negotiation attribute information according to the identification information carried in a packet to be sent.

In some implementations, the step that the packet transmitting terminal determines the type of service in the negotiation attribute information according to the identification information carried in the packet to be sent includes at least one of the following steps: in the case where the packet to be sent is an IP packet and the identification information includes DSCP information in the IP packet, the packet transmitting terminal takes the DSCP information as the type of service in the negotiation attribute information; in the case where the packet to be sent is a GTPU packet and the identification information includes a UE IP address in the GTPU packet, the packet transmitting terminal takes the UE IP address as the type of service in the negotiation attribute information; and in the case where the packet to be sent is a GTPU packet and the identification information includes a TEID in the GTPU packet, the packet transmitting terminal takes the TEID as the type of service in the negotiation attribute information.

That is, the negotiation attribute information may include some fields in the network packet, such as a DSCP field in the IP packet, a UE IP field in the GTPU packet, and a TEID field in the GTPU packet, and the related IP may include Internet Protocol Version 4 (IPv4) and (Internet Protocol Version 6, Internet Protocol Version 6 (IPv6).

In some implementations, the step 301 includes that, when the packet transmitting terminal fails to use the negotiation attribute information to negotiate with the packet receiving terminal or the packet receiving terminal does not support the use of the negotiation attribute information in negotiation, the packet transmitting terminal negotiates with the packet receiving terminal using the five-tuple information to determine a default SA, which corresponds to an IPSec security tunnel.

When the packet transmitting terminal negotiates with the packet receiving terminal, according to the standard IPSec protocol, the default SA is set up through Traffic Selector (TS) negotiation according to the five-tuple information.

If the packet receiving terminal does not support attribute SA negotiation or the attribute SA negotiation between the packet transmitting terminal and the packet receiving terminal fails, the packet transmitting terminal associates all packets with the default SA by default and sends the packets only through a default security tunnel.

As shown in Fig. 5, in some implementations, the step 301 includes steps 501 and 502.

In the step 501, the packet transmitting terminal negotiates with the packet receiving terminal using the five-tuple information to determine a default SA, which corresponds to an IPSec security tunnel.

When the packet transmitting terminal negotiates with the packet receiving terminal, according to the standard IPSec protocol, the default SA is set up through TS negotiation according to the five-tuple information.

In the step 502, the packet transmitting terminal negotiates with the packet receiving terminal using the five-tuple information and the negotiation attribute information to determine one or more attribute SAs, each of which corresponds to one IPSec security tunnel.

The packet transmitting terminal sets up the attribute SA according to the five-tuple information and the negotiation attribute information. A plurality pieces of negotiation attribute information may exist, each piece of negotiation attribute information can be used for negotiation to set up one attribute SA, and each attribute SA corresponds to one IPSec security tunnel.

In the step 302, the packet transmitting terminal sends a packet to the packet receiving terminal through the IPSec security tunnel.

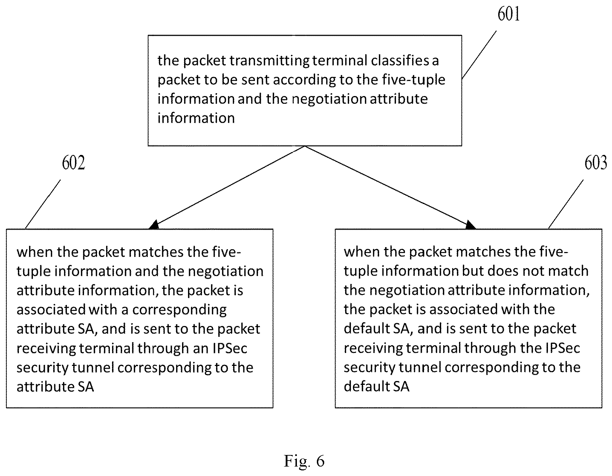

As shown in Fig. 6, in some implementations, the step 302 includes steps 601 to 603.

In the step 601, the packet transmitting terminal classifies a packet to be sent according to the five-tuple information and the negotiation attribute information.

In the step 602, when the packet matches the five-tuple information and the negotiation attribute information, the packet is associated with a corresponding attribute SA, and is sent to the packet receiving terminal through an IPSec security tunnel corresponding to the attribute SA.

The packet transmitting terminal classifies different types of packets according to the characteristics of the packets, the five-tuple information, and the negotiation attribute information, associates the packets with the attribute SAs, and sends the packets to different attribute security tunnels.

In the step 603, when the packet matches the five-tuple information but does not match the negotiation attribute information, the packet is associated with the default SA, and is sent to the packet receiving terminal through the IPSec security tunnel corresponding to the default SA.

With more security tunnels being set up through the negotiation using the negotiation attribute, packets of different types of services can be distributed to different tunnels, so that the IPSec processing capability of a device or system can be improved.

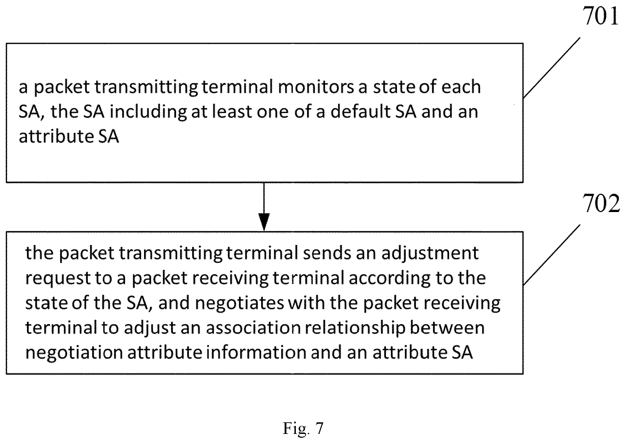

As shown in Fig. 7, in some implementations, the method further includes steps 701 and 702.

In the step 701, the packet transmitting terminal monitors a state of each SA, the SA including at least one of the default SA and the attribute SA.

In some implementations, the state of the SA includes at least one of utilization of a CPU core where the SA is located, and network traffic of the IPSec security tunnel corresponding to the SA.

In the step 702, the packet transmitting terminal sends an adjustment request to the packet receiving terminal according to the state of the SA, and negotiates with the packet receiving terminal to adjust an association relationship between the negotiation attribute information and an attribute SA.

In some implementations, the packet transmitting terminal sends the adjustment request to the packet receiving terminal according to the state of the SA and a load balancing algorithm. The load balancing algorithm may be polling, weighting, etc. To adjust the association relationship between the negotiation attribute information and the attribute SA is to adjust the association relationships between the different types of packets and the attribute SAs. For example, adjusting a range of a value in the negotiation attribute information is equivalent to adjusting the association relationships between the different types of packets and the attribute SAs.

According to the present disclosure, the negotiation attribute information is used to determine the IPSec security tunnels, so that the distribution of packets can be realized, the IPSec processing capability can be improved, and the encryption requirements of the 5G high-flow services can be met.

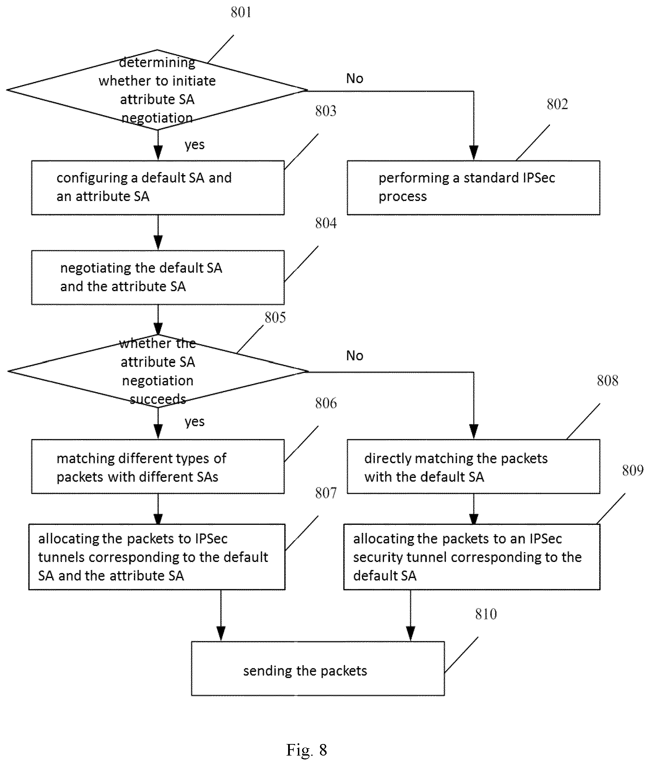

As shown in Fig. 8 which is a flowchart illustrating a transmission method according to an example, the transmission method includes steps 801 to 810.

In the step 801, whether to initiate an attribute SA negotiation is determined according to a current application, if yes, the step 803 is to be performed, otherwise the step 802 is to be performed.

It is possible that it is the network administrator who controls the initiation of the attribute SA negotiation.

In the step 802, a standard IPSec process is performed.

In the step 803, a default SA and an attribute SA are configured according to five-tuple information and negotiation attribute information.

In the step 804, the default SA and the attribute SA are negotiated.

In the step 805, it is determined whether the attribute SA negotiation succeeds, if yes, the step 806 is to be performed, otherwise the step 808 is to be performed.

In the step 806, different types of packets are matched with different SAs (including the default SA and the attribute SA).

In the step 807, the packets are allocated to the IPSec tunnels corresponding to the default SA and the attribute SA, and then the step 810 is to be performed.

In the step 808, the packets are directly matched with the default SA.

In the step 809, the packets are allocated to an IPSec security tunnel corresponding to the default SA.

In the step 810, the packets are sent.

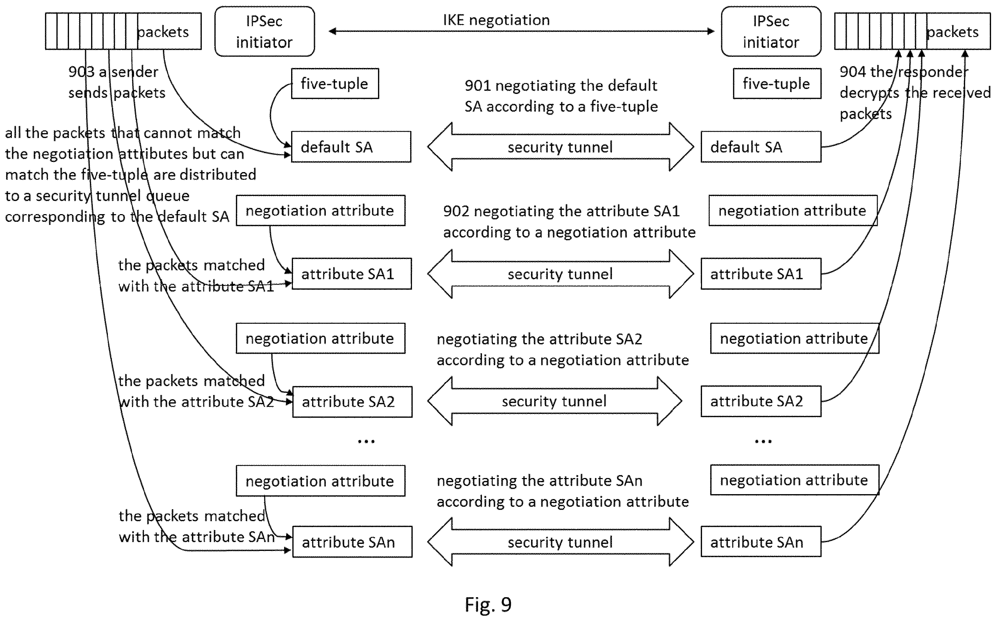

As shown in Fig. 9, the attribute SA negotiation and packet transmission of an IPSec initiator includes steps 901 to 904.

In the step 901, a default SA is negotiated according to five-tuple information.

In the step 902, attributes SA1 to SAn are negotiated according to attributes.

In the step 903, packets are sent.

All of the packets that cannot match the negotiation attributes but can match the five-tuple are distributed to a security tunnel queue corresponding to the default SA; the packets matched with the attribute SA1 are distributed to a security tunnel corresponding to the SA1; the packets matched with the attribute SA2 are distributed to a security tunnel corresponding to the SA2; ...; and the packets matched with the attribute SAn are distributed to a security tunnel corresponding to the SAn.

In the step 904, after a responder receives a packet, the responder decrypts the packet according to an IP address and a matched SPI.

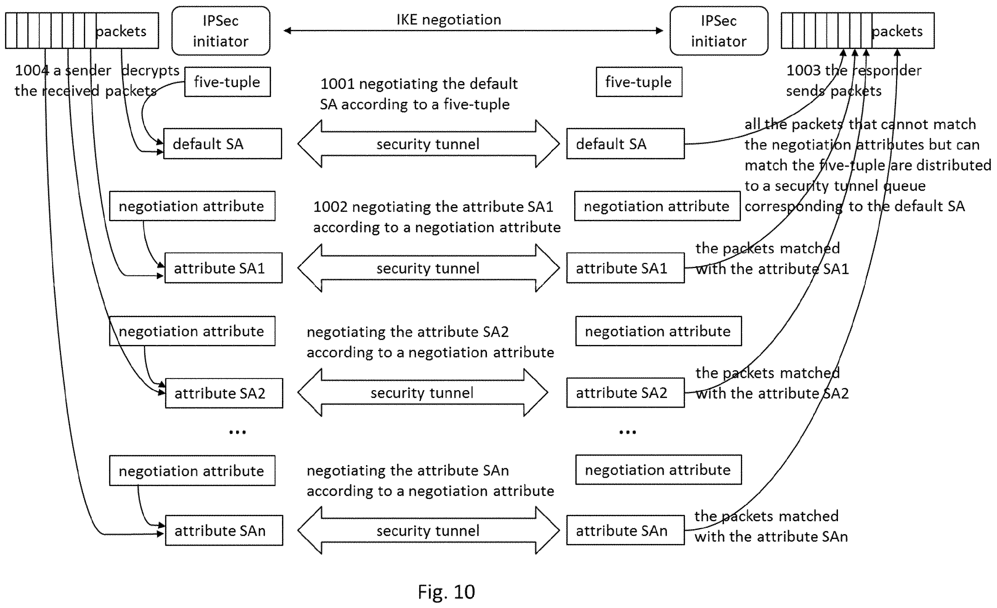

As shown in Fig. 10, similar to Fig. 9, the attribute SA negotiation and packet transmission of an IPSec responder includes steps 1001 to 1004.

In the step 1001, a default SA is negotiated according to five-tuple information.

In the step 1002, attributes SA1 to SAn are negotiated according to attributes.

In the step 1003, packets are sent.

All of the packets that cannot match the negotiation attributes but can match the five-tuple are distributed to a security tunnel queue corresponding to the default SA; the packets matched with the attribute SA1 are distributed to a security tunnel corresponding to the SA1; the packets matched with the attribute SA2 are distributed to a security tunnel corresponding to the SA2; ...; and the packets matched with the attribute SAn are distributed to a security tunnel corresponding to the SAn.

In the step 1004, after an initiator receives a packet, the initiator decrypts the packet according to an IP address and a matched SPI.

It should be noted that each SA illustrated by Fig. 9 corresponds to a direction from the IPSec initiator to the IPSec responder, each SA illustrated by Fig. 10 corresponds to a direction from the IPSec responder to the IPSec initiator, and the direction illustrated by Fig. 9 is different from that illustrated by Fig. 10.

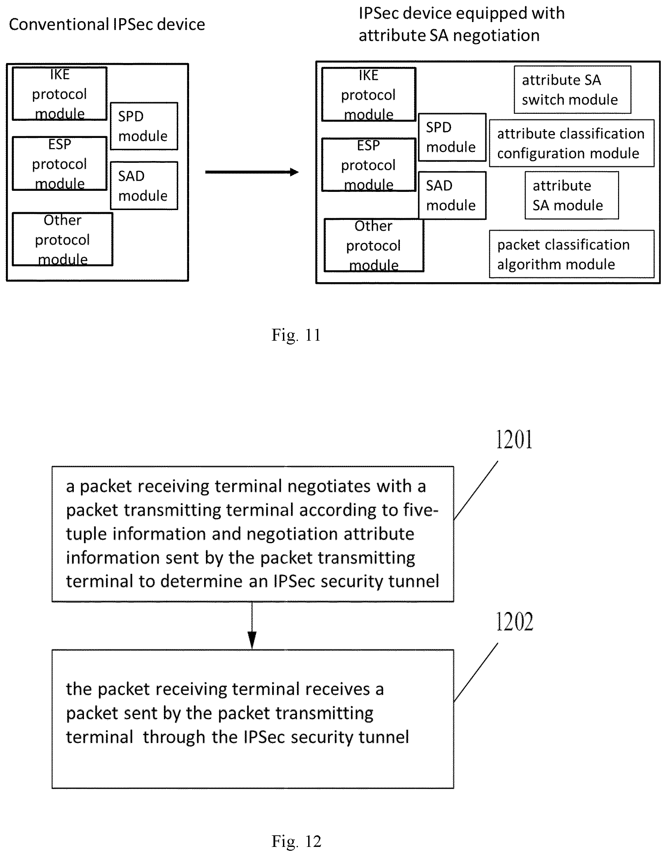

As shown in Fig. 11 which is a comparison diagram of a conventional IPSec device and an IPSec device equipped with attribute SA negotiation, the conventional IPSec device includes an IKE protocol module, an ESP protocol module, a Security Policy Database (SPD) module, a Security Association Database (SAD) module, and other protocol modules. Compared with the conventional IPSec device, the IPSec device equipped with attribute SA negotiation further includes an attribute SA switch module, an attribute classification configuration module, an attribute SA module, and a packet classification algorithm module.

The attribute SA switch module is configured to control whether to start up an attribute SA negotiation function. The attribute classification configuration module is configured to configure negotiation attribute information. The attribute SA module is configured to configure an attribute SA. The packet classification algorithm module is configured to classify packets according to the negotiation attribute information.

As shown in Fig. 12, corresponding to the packet transmitting terminal, a transmission method of the packet receiving terminal according to an embodiment of the present disclosure includes steps 1201 and 1202.

In the step 1201, the packet receiving terminal negotiates with the packet transmitting terminal according to the five-tuple information and the negotiation attribute information sent by the packet transmitting terminal to determine an IPSec security tunnel.

The packet transmitting terminal is an IPSec initiator, and the packet receiving terminal is an IPSec responder; or the packet transmitting terminal is an IPSec responder, and the packet receiving terminal is an IPSec initiator.

The IPSec initiator includes, but is not limited to, a hardware device such as a wireless base station (including a 2G base station, a 3G base station, a 4G base station, a 5G base station, etc.) and a set-top box, and may further include a general software module.

The IPSec responder includes, but is not limited to, a security gateway and a wireless base station, and may further include a general software module.

The five-tuple information includes a source IP address, a destination IP address, a protocol number, source port information, and destination port information.

The negotiation attribute information may be related to characteristics of services.

In some implementations, the negotiation attribute information is related to a type of service of a packet, and is configured to distinguish the service information except the five-tuple information. Different negotiation attribute information can be used to negotiate different security tunnels.

In some implementations, the negotiation attribute information includes one of the following information: type of service, type of service and length, and type of service, length and value. The type of service (Type) may be distinguished according to specific services, and may be an enumerated value (e.g. 1, 2, 3...) pre-defined by both the packet transmitting terminal and the packet receiving terminal, or a specific type of service, such as a DSCP, a UE IP address, and a TEID. The length (Length) is a length of a type-of-service parameter. The value (Value) is a value or range corresponding to the type of service, for example, the QoS is in a range of 36 to 46.

In some implementations, the step 1201 includes that, when the negotiation with the packet transmitting terminal according to the negotiation attribute information fails or the packet receiving terminal does not support the use of the negotiation attribute information in negotiation, the packet receiving terminal negotiates with the packet transmitting terminal using the five-tuple information to determine a default SA, which corresponds to an IPSec security tunnel.

In some implementations, the step 1201 includes that the packet receiving terminal negotiates with the packet transmitting terminal according to the five-tuple information to determine a default SA, which corresponds to an IPSec security tunnel; and the packet receiving terminal negotiates with the packet transmitting terminal according to the five-tuple information and the negotiation attribute information to determine one or more attribute SAs, each of which corresponds to one IPSec security tunnel.

In the step 1202, the packet receiving terminal receives a packet sent by the packet transmitting terminal through the IPSec security tunnel.

According to the classification of the packets of different types of services, the packet receiving terminal receives the packets through corresponding IPSec security tunnels.

With more security tunnels being set up through the negotiation using the negotiation attribute, the packets of different types of services can be distributed to different tunnels, so that the IPSec processing capability of a device or system can be improved.

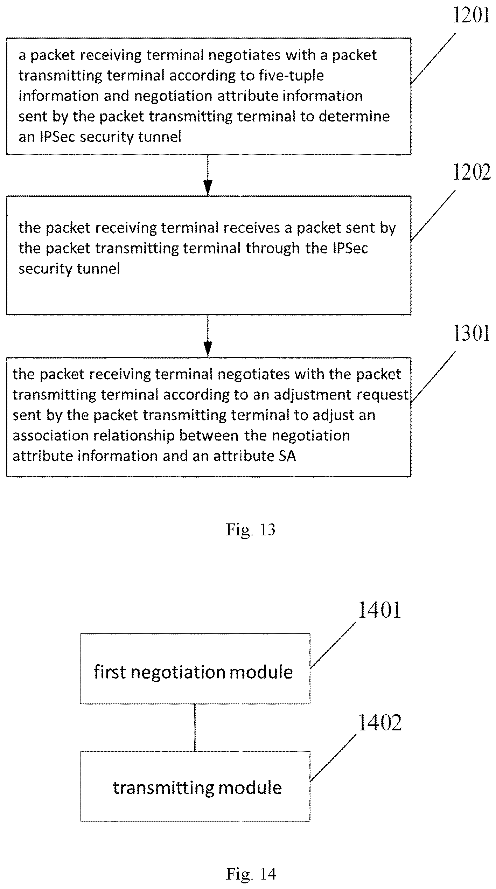

As shown in Fig. 13, in some implementations, the method further includes step 1301.

In the step 1301, the packet receiving terminal negotiates with the packet transmitting terminal according to the adjustment request sent by the packet transmitting terminal to adjust the association relationship between the negotiation attribute information and the attribute SA.

To adjust the association relationship between the negotiation attribute information and the attribute SA is to adjust the association relationships between different types of packets and the attribute SAs. For example, adjusting a range of a value in the negotiation attribute information is equivalent to adjusting the association relationships between the different types of packets and the attribute SAs.

According to the present disclosure, the negotiation attribute information is used to determine the IPSec security tunnels, so that the distribution of packets can be realized, the IPSec processing capability can be improved, and the encryption requirements of the 5G high-flow services can be met.

Some application instances are given below to illustrate the present disclosure.

Application Instance 1 (a base station negotiates with a security gateway, and a TEID of a GTPU packet is used as a negotiation attribute.)
1. An attribute SA negotiation function is started up when the current flow of the base station exceeds an IPSec single-core flow specification or IPSec single-tunnel flow specification.
2. When the base station functioned as an IPSec initiator negotiates with a security gateway functioned as an IPSec responder for an IPSec tunnel, in addition to five-tuple information, TEID information of a GTPU packet is further carried as negotiation attribute information.
   The negotiation attribute information consists of a type, a length, and a value, etc., the type is configured to be a TEID, the length is a length of a TEID field in the GTPU packet, and the value is a TEID value and usually configured to be a range of TEID value.
3. When the base station negotiates with the security gateway, according to the standard IPSec protocol, a pair of default SAs (corresponding to two directions) is set up through TS negotiation according to the five-tuple information, and each default SA corresponds to one security tunnel.
4. The base station sets up an attribute SA according to the five-tuple information and the configuration of the range of TEID, each TEID field can be used to negotiate one attribute SA, and each attribute SA corresponds to one security tunnel.
5. The base station classifies different packets according to characteristics of data packets, the five-tuple information and the TEID values, associates the packets with corresponding attribute SAs (set up according to the ranges of the TEID values), and sends the packets to different attribute security tunnels.
6. The base station monitors states of a current default SA and each attribute SA, adjusts association relationships between different types of packets and the attribute SAs according to a certain load balancing algorithm (such as polling or weighting), and ensures that the packets having the same attribute are processed in the same attribute SA, and the state of the SA includes utilization of a CPU core where the current SA is located, network traffic, etc.
7. If the security gateway does not support attribute SA negotiation or the attribute SA negotiation between the base station and the security gateway fails, the base station associates all the packets with the default SA by default, and sends the packets through the default security tunnel.

A process of setting up SAs by the security gateway with the base station is identical to the above process.

With more security tunnels being set up through the negotiation using the negotiation attribute, packets of different types of services can be distributed to different tunnels, so that the IPSec processing capability of a device or system can be improved.

Application Instance 2 (a base station negotiates with a security gateway, and a DSCP of a packet is used as a negotiation attribute.)
1. An attribute SA negotiation function is started up when the current flow of the base station exceeds an IPSec single-core flow specification or IPSec single-tunnel flow specification.
2. When the base station functioned as an IPSec initiator negotiates with a security gateway functioned as an IPSec responder for an IPSec tunnel, in addition to five-tuple information, DSCP information of an inner packet of a GTPU tunnel is further carried as negotiation attribute information.
   The negotiation attribute information consists of a type, a length, and a value, etc., the type is configured to be a DSCP, the length is a length of a DSCP field in the GTPU packet, and the value is a DSCP value and usually configured to be in a range.
3. When the base station negotiates with the security gateway, according to the standard IPSec protocol, a pair of default SAs is set up through TS negotiation according to the five-tuple information, and each default SA corresponds to one security tunnel.
4. The base station sets up an attribute SA according to the five-tuple information and the configuration of the range of DSCP, each DSCP field can be used to negotiate one attribute SA, and each attribute SA corresponds to one security tunnel.
5. The base station classifies different packets according to characteristics of data packets, the five-tuple information and the DSCP values, associates the packets with corresponding attribute SAs (set up according to the ranges of the DSCP values), and sends the packets to different attribute security tunnels.
6. The base station monitors states of a current default SA and each attribute SA, adjusts association relationships between different types of packets and the attribute SAs according to a certain load balancing algorithm (such as polling or weighting), and ensures that the packets having the same attribute are processed in the same attribute SA, and the state of the SA includes utilization of a CPU core where the current SA is located, network traffic, etc.
7. If the security gateway does not support attribute SA negotiation or the attribute SA negotiation between the base station and the security gateway fails, the base station associates all the packets with the default SA by default, and sends the packets through the default security tunnel.

A process of setting up SAs by the security gateway with the base station is identical to the above process.

With more security tunnels being set up through the negotiation using the negotiation attribute, the packets of different types of services can be distributed to different tunnels, so that the IPSec processing capability of a device or system can be improved.

Application Instance 3 (a base station A negotiates with a base station B, and a UE IP of a GTPU packet is used as a negotiation attribute.)
1. An attribute SA negotiation function is started up when the current flow of the base station exceeds an IPSec single-core flow specification or IPSec single-tunnel flow specification.
2. When a base station A functioned as an IPSec initiator negotiates with a base station B functioned as an IPSec responder for an IPSec tunnel, in addition to five-tuple information, UE IP information of a GTPU packet is further carried as negotiation attribute information.
   The negotiation attribute information consists of a type, a length, and a value, the type is configured to be a UE IP, the length is a length of a UE IP field in the GTPU packet, the value is a UE IP value and usually configured to be a range of UE IP value, and the related IP may be IPv4 or IPv6.
3. When the base station A negotiates with the base station B, according to the standard IPSec protocol, a pair of default SAs is set up through TS negotiation according to the five-tuple information, and each default SA corresponds to one security tunnel.
4. The base station A sets up an attribute SA according to the five-tuple information and the configuration of the range of UE IP, each UE IP field can be used to negotiate one attribute SA, and each attribute SA corresponds to one security tunnel.
5. The base station A classifies different packets according to characteristics of data packets, the five-tuple information and the UE IP values, associates the packets with corresponding attribute SAs (set up according to the ranges of the UE IP values), and sends the packets to different attribute security tunnels.
6. The base station A monitors states of a current default SA and each attribute SA, adjusts association relationships between different types of packets and the attribute SAs according to a certain load balancing algorithm (such as polling or weighting), and ensures that the packets having the same attribute are processed in the same attribute SA, and the state of the SA includes utilization of a CPU core where the current SA is located, network traffic, etc.
7. If the base station B does not support attribute SA negotiation or the attribute SA negotiation between the base station A and the base station B fails, the base station A associates all the packets with the default SA by default, and sends the packets through the default security tunnel.

A process of setting up SAs by the base station B with the base station A is identical to the above process.

With more security tunnels being set up through the negotiation using the negotiation attribute, the packets of different types of services can be distributed to different tunnels, so that the IPSec processing capability of a device or system can be improved.

Application Instance 4 (a set-top box negotiates with a security gateway, and a DSCP of a packet is used as a negotiation attribute.)
1. An attribute SA negotiation function is started up when the current flow of the set-top box exceeds an IPSec single-core flow specification or IPSec single-tunnel flow specification.
2. When the set-top box functioned as an IPSec initiator negotiates with a security gateway functioned as an IPSec responder for an IPSec tunnel, in addition to five-tuple information, DSCP information of an inner packet of a packet is further carried as negotiation attribute information.
   The negotiation attribute information consists of a type, a length, and a value, the type is configured to be a DSCP, the length is a length of a DSCP field (6 bits), and the value is a DSCP value and usually configured to be in a range.
3. When the set-top box negotiates with the security gateway, according to the standard IPSec protocol, a pair of default SAs is set up through TS negotiation according to the five-tuple information, and each default SA corresponds to one security tunnel.
4. The set-top box sets up an attribute SA according to the five-tuple information and the configuration of the range of DSCP, each DSCP field can be used to negotiate one attribute SA, and each attribute SA corresponds to one security tunnel.
5. The set-top box classifies different packets according to characteristics of data packets, the five-tuple information and the DSCP values, associates the packets with corresponding attribute SAs (set up according to the ranges of the DSCP values), and sends the packets to different attribute security tunnels.
6. The set-top box monitors states of a current default SA and each attribute SA, adjusts association relationships between different types of packets and the attribute SAs according to a certain load balancing algorithm (such as polling or weighting), and ensures that the packets having the same attribute are processed in the same attribute SA, and the state of the SA includes utilization of a CPU core where the current SA is located, network traffic, etc.
7. If the security gateway does not support attribute SA negotiation, the set-top box associates all the packets with the default SA by default, and sends the packets through the default security tunnel.

A process of setting up SAs by the security gateway with the set-top box is identical to the above process.

With more security tunnels being set up through the negotiation using the negotiation attribute, the packets of different types of services can be distributed to different tunnels, so that the IPSec processing capability of a device or system can be improved.

As shown in Fig. 14, an embodiment of the present disclosure further provides a transmission device applied to a packet transmitting terminal, including a first negotiation module 1401 configured to negotiate with a packet receiving terminal using five-tuple information and negotiation attribute information to determine an IPSec security tunnel; and a transmitting module 1402 configured to send a packet to the packet receiving terminal through the IPSec security tunnel.

In some implementations, the five-tuple information includes a source IP address, a destination IP address, a protocol number, source port information, and destination port information.

The negotiation attribute information is related to a type of service of the packet.

In some implementations, the negotiation attribute information includes one of the following information: type of service, type of service and length, and type of service, length and value.

In some implementations, the device further includes a determination module configured to determine a type of service in the negotiation attribute information according to the identification information carried in a packet to be sent.

In some implementations, the determination module is configured to take DSCP information as the type of service in the negotiation attribute information in the case where the packet to be sent is an IP packet and the identification information includes the DSCP information in the IP packet, or take an UE IP address as the type of service in the negotiation attribute information in the case where the packet to be sent is a GTPU packet and the identification information includes the UE IP address in the GTPU packet, or take a TEID as the type of service in the negotiation attribute information in the case where the packet to be sent is a GTPU packet and the identification information includes the TEID in the GTPU packet.

In some implementations, the first negotiation module 1401 is configured to negotiate with the packet receiving terminal using the five-tuple information to determine a default SA which corresponds to an IPSec security tunnel when the negotiation with the packet receiving terminal according to the negotiation attribute information fails or the packet receiving terminal does not support the use of the negotiation attribute information in negotiation.

In some implementations, the first negotiation module 1401 is configured to negotiate with the packet receiving terminal using the five-tuple information to determine a default SA which corresponds to an IPSec security tunnel, and negotiate with the packet receiving terminal using the five-tuple information and the negotiation attribute information to determine one or more attribute SAs, each of which corresponds to one IPSec security tunnel.

In some implementations, the transmitting module 1402 is configured to classify a packet to be sent according to the five-tuple information and the negotiation attribute information; when the packet matches the five-tuple information and the negotiation attribute information, the transmitting module 1402 associates the packet with a corresponding attribute SA, and sends the packet to the packet receiving terminal through an IPSec security tunnel corresponding to the attribute SA; or, when the packet matches the five-tuple information but does not match the negotiation attribute information, the transmitting module 1402 associates the packet with the default SA, and sends the packet to the packet receiving terminal through the IPSec security tunnel corresponding to the default SA.

In some implementations, the device further includes a monitoring and adjusting module configured to monitor a state of each SA, the SA including at least one of the default SA and the attribute SA, send an adjustment request to the packet receiving terminal according to the state of the SA, and negotiate with the packet receiving terminal to adjust an association relationship between the negotiation attribute information and the attribute SA.

In some implementations, the state of the SA includes at least one of utilization of a CPU core where the SA is located, and network traffic of the IPSec security tunnel corresponding to the SA.

In some implementations, the monitoring and adjusting module is configured to send the adjustment request to the packet receiving terminal according to the state of the SA and a load balancing algorithm.

According to the present disclosure, the negotiation attribute information is used to determine the IPSec security tunnels, so that the distribution of packets can be realized, the IPSec processing capability can be improved, and the encryption requirements of the 5G high-flow services can be met.

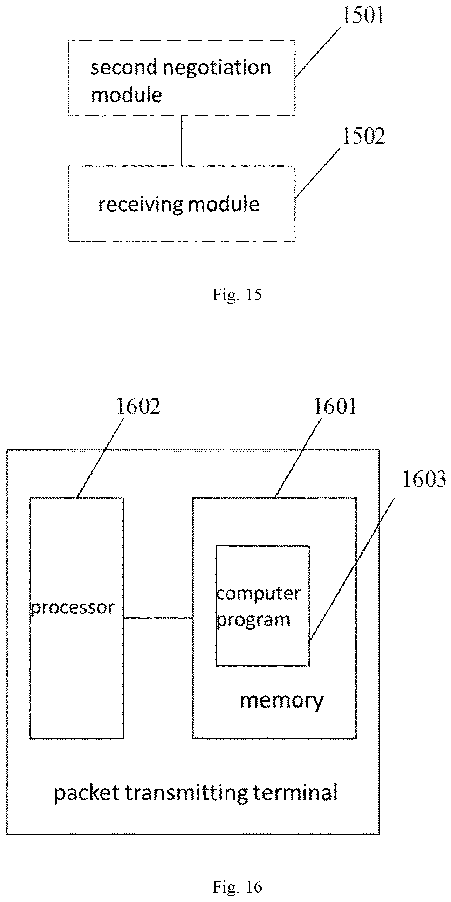

As shown in Fig. 15, an embodiment of the present disclosure further provides a transmission device, including a second negotiation module 1501 configured to negotiate with a packet transmitting terminal according to five-tuple information and negotiation attribute information sent by the packet transmitting terminal to determine an IPSec security tunnel; and a receiving module 1502 configured to receive a packet sent by the packet transmitting terminal through the IPSec security tunnel.

In some implementations, the five-tuple information includes a source IP address, a destination IP address, a protocol number, source port information, and destination port information.

The negotiation attribute information is related to a type of service.

In some implementations, the negotiation attribute information includes one of the following information: type of service, type of service and length, and type of service, length and value.

In some implementations, the second negotiation module 1501 is configured for a packet receiving terminal to negotiate with the packet transmitting terminal using the five-tuple information to determine a default SA which corresponds to an IPSec security tunnel when the negotiation with the packet transmitting terminal according to the negotiation attribute information fails or the packet receiving terminal does not support the use of the negotiation attribute information in negotiation.

In some implementations, the second negotiation module 1501 is configured for a packet receiving terminal to negotiate with the packet transmitting terminal according to the five-tuple information to determine a default SA which corresponds to an IPSec security tunnel, and negotiate with the packet transmitting terminal according to the five-tuple information and the negotiation attribute information to determine one or more attribute SAs, each of which corresponds to one IPSec security tunnel.

In some implementations, the device further includes an adjusting module configured to negotiate with the packet transmitting terminal according to an adjustment request sent by the packet transmitting terminal to adjust an association relationship between the negotiation attribute information and the attribute SA.

According to the present disclosure, the negotiation attribute information is used to determine the IPSec security tunnels, so that the distribution of packets can be realized, the IPSec processing capability can be improved, and the encryption requirements of the 5G high-flow services can be met.

As shown in Fig. 16, an embodiment of the present disclosure further provides a packet transmitting terminal, including a memory 1601, a processor 1602, and a computer program 1603 which is stored on the memory 1601 and is capable of running on the processor 1602, and the processor 1602 performs the transmission method shown in Fig. 3 when executing the program.

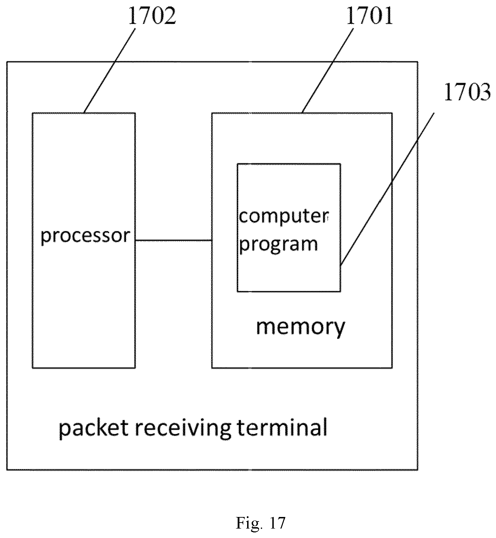

As shown in Fig. 17, an embodiment of the present disclosure further provides a packet receiving terminal, including a memory 1701, a processor 1702, and a computer program and the processor 1702 performs the transmission method shown in Fig. 12 when executing the program.

An embodiment of the present disclosure further provides a computer-readable storage medium having a computer-executable instruction stored thereon, and the computer-executable instruction is configured to perform the transmission method.

In the embodiment, the above storage medium may include, but is not limited to, various media capable of storing program codes, such as a Universal Serial Bus Flash Disk (USB flash disk), a Read-Only Memory (ROM), a Random Access Memories (RAM), a mobile hard disk, a magnetic disk, and an optical disc.

It should be understood that, all or some of the steps in the method disclosed above, the functional modules/units in the systems and the devices may be implemented as software, firmware, hardware, or suitable combinations thereof. If implemented as hardware, the division between the functional modules/units stated above is not necessarily corresponding to the division of physical components; for example, one physical component may have a plurality of functions, or one function or step may be performed through cooperation of several physical components. Some or all of the components may be implemented as software executed by a processor, such as a digital signal processor or a microprocessor, or may be implemented as hardware, or may be implemented as an integrated circuit, such as an application specific integrated circuit. Such software may be distributed on computer-readable medium, which may include computer storage medium (or non-transitory medium) and communication medium (or transitory medium). The term "computer storage medium" includes volatile/nonvolatile and removable/non-removable medium used in any method or technology for storing information (such as computer-readable instructions, data structures, program modules and other data). The computer storage medium include, but are not limited to, RAMs, ROMs, Electrically Erasable Programmable Read-Only Memories (EEPROMs), flash memories or other memory techniques, Compact Disc Read-Only Memories (CD-ROMs), Digital Video Disks (DVDs) or other optical discs, magnetic cassettes, magnetic tapes, magnetic disks or other magnetic storage devices, or any other medium which can be used to store the desired information and can be accessed by a computer. In addition, the communication medium generally include computer-readable instructions, data structures, program modules or other data in a modulated data signal, such as a carrier wave or other transmission mechanism, and may include any information delivery medium.

## Claims

1. A transmission method, comprising:
negotiating, by a packet transmitting terminal, with a packet receiving terminal using five-tuple information and negotiation attribute information to determine an Internet Protocol Security, IPSec, security tunnel (301); and
sending, by the packet transmitting terminal, a packet to the packet receiving terminal through the IPSec security tunnel (302), **characterized by**:
wherein negotiating with the packet receiving terminal using the five-tuple information and the negotiation attribute information to determine the IPSec security tunnel comprises:
negotiating, by the packet transmitting terminal, with the packet receiving terminal using the five-tuple information to determine a default Security Association, SA, which corresponds to an IPSec security tunnel (501); and
negotiating, by the packet transmitting terminal, with the packet receiving terminal using the five-tuple information and the negotiation attribute information to determine one or more attribute SAs, each of which corresponds to one IPSec security tunnel (502),
wherein sending the packet to the packet receiving terminal through the IPSec security tunnel comprises:
classifying, by the packet transmitting terminal, the packet to be sent according to the five-tuple information and the negotiation attribute information;
in response to that the packet matches the five-tuple information and the negotiation attribute information, associating the packet with a corresponding attribute SA, and sending the packet to the packet receiving terminal through an IPSec security tunnel corresponding to the attribute SA; or
in response to that the packet matches the five-tuple information but does not match the negotiation attribute information, associating the packet with the default SA, and sending the packet to the packet receiving terminal through the IPSec security tunnel corresponding to the default SA.

2. The method of claim 1, wherein the five-tuple information comprises a source Internet Protocol, IP, address, a destination IP address, a protocol number, source port information, and destination port information; and
the negotiation attribute information is related to a type of service of the packet.

3. The method of claim 1 or 2, further comprising:
before negotiating with the packet receiving terminal using the five-tuple information and the negotiation attribute information to determine the IPSec security tunnel, determining, by the packet transmitting terminal, a type of service in the negotiation attribute information according to identification information carried in the packet to be sent (401).

4. The method of claim 1, wherein the packet transmitting terminal is an IPSec initiator, and the packet receiving terminal is an IPSec responder; or the packet transmitting terminal is an IPSec responder, and the packet receiving terminal is an IPSec initiator.

5. A transmission method, comprising:
negotiating, by a packet receiving terminal, with a packet transmitting terminal according to five-tuple information and negotiation attribute information sent by the packet transmitting terminal to determine an IPSec security tunnel (1201); and
receiving, by the packet receiving terminal, a packet sent by the packet transmitting terminal through the IPSec security tunnel (1202), **characterized by**:
wherein negotiating with the packet transmitting terminal according to the five-tuple information and the negotiation attribute information to determine the IPSec security tunnel comprises:
negotiating, by the packet receiving terminal, with the packet transmitting terminal according to the five-tuple information to determine a default Security Association, SA, which corresponds to an IPSec security tunnel; and
negotiating, by the packet receiving terminal, with the packet transmitting terminal according to the five-tuple information and the negotiation attribute information to determine one or more attribute SAs, each of which corresponds to one IPSec security tunnel,
wherein receiving the packet sent by the packet transmitting terminal through the IPSec security tunnel comprises:
in response to that the packet matches the five-tuple information and the negotiation attribute information, associating the packet with a corresponding attribute SA, and receiving the packet sent by the packet transmitting terminal through an IPSec security tunnel corresponding to the attribute SA; or
in response to that the packet matches the five-tuple information but does not match the negotiation attribute information, associating the packet with the default SA, and receiving the packet sent by the packet transmitting terminal through the IPSec security tunnel corresponding to the default SA.

6. The method of claim 5, wherein the five-tuple information comprises a source IP address, a destination IP address, a protocol number, source port information, and destination port information; and
the negotiation attribute information is related to a type of service.

7. A transmission device, comprising:
a first negotiation module (1401) configured to negotiate with a packet receiving terminal using five-tuple information and negotiation attribute information to determine an IPSec security tunnel; and
a transmitting module (1402) configured to send a packet to the packet receiving terminal through the IPSec security tunnel, **characterized by**:
wherein the first negotiation module (1401) is configured to negotiate with the packet receiving terminal using the five-tuple information to determine a default Security Association, SA, which corresponds to an IPSec security tunnel, and negotiate with the packet receiving terminal using the five-tuple information and the negotiation attribute information to determine one or more attribute SAs, each of which corresponds to one IPSec security tunnel;
the transmitting module (1402) is configured to classify the packet to be sent according to the five-tuple information and the negotiation attribute information, in response to that the packet matches the five-tuple information and the negotiation attribute information, associate the packet with a corresponding attribute SA, and send the packet to the packet receiving terminal through an IPSec security tunnel corresponding to the attribute SA, or in response to that the packet matches the five-tuple information but does not match the negotiation attribute information, associate the packet with the default SA, and send the packet to the packet receiving terminal through the IPSec security tunnel corresponding to the default SA.

8. A transmission device, comprising:
a second negotiation module (1501) configured to negotiate with a packet transmitting terminal according to five-tuple information and negotiation attribute information sent by the packet transmitting terminal to determine an IPSec security tunnel; and
a receiving module (1502) configured to receive a packet sent by the packet transmitting terminal through the IPSec security tunnel, **characterized by**:
wherein the second negotiation module (1501) is configured to negotiate with the packet transmitting terminal according to the five-tuple information to determine a default security Association, SA, which corresponds to an IPSec security tunnel, and negotiate with the packet transmitting terminal according to the five-tuple information and the negotiation attribute information to determine one or more attribute SAs, each of which corresponds to one IPSec security tunnel;
the receiving module (1502) is configured to associate the packet with a corresponding attribute SA and receive the packet sent by the packet transmitting terminal through an IPSec security tunnel corresponding to the attribute SA in response to that the packet matches the five-tuple information and the negotiation attribute information, or associate the packet with the default SA and receive the packet sent by the packet transmitting terminal through the IPSec security tunnel corresponding to the default SA in response to that the packet matches the five-tuple information but does not match the negotiation attribute information.

9. A packet transmitting terminal, comprising a memory (1601), a processor (1602), and a computer program (1603) which is stored on the memory (1601) and is capable of running on the processor (1602), wherein the processor (1602) performs the transmission method of any one of claims 1 to 4 when executing the program (1603).

10. A packet receiving terminal, comprising a memory (1701), a processor (1702), and a computer program (1703) which is stored on the memory (1701) and is capable of running on the processor (1702), wherein the processor (1702) performs the transmission method of claim 5 or 6 when executing the program (1703).

11. A computer-readable storage medium having a computer-executable instruction stored thereon, wherein the computer-executable instruction is configured to perform the transmission method of any one of claims 1 to 6.

## Patentansprüche

1. Ein Übertragungsverfahren, umfassend: Aushandeln, durch ein Paketsendeterminal, mit einem Paketempfangsterminal unter Verwendung von Fünf-Tupel-Informationen und Aushandlungsattributinformationen, um einen Internet-Protocol-Security-, IPSec-, Sicherheitstunnel (301) zu bestimmen, und Senden, durch das Paketsendeterminal, eines Pakets an das Paketempfangsterminal durch den IPSec-Sicherheitstunnel (302), **dadurch gekennzeichnet, dass** das Aushandeln mit dem Paketempfangsterminal unter Verwendung der Fünf-Tupel-Informationen und der Aushandlungsattributinformationen, um den IPSec-Sicherheitstunnel zu bestimmen, umfasst: Aushandeln, durch das Paketsendeterminal, mit dem Paketempfangsterminal unter Verwendung der Fünf-Tupel-Informationen, um eine Standard-Sicherheitsassoziation, SA, zu bestimmen, die einem IPSec-Sicherheitstunnel (501) entspricht, und Aushandeln, durch das Paketsendeterminal, mit dem Paketempfangsterminal unter Verwendung der Fünf-Tupel-Informationen und der Aushandlungsattributinformationen, um eine oder mehrere Attribut-SAs zu bestimmen, von denen jede einem IPSec-Sicherheitstunnel (502) entspricht, wobei das Senden des Pakets an das Paketempfangsterminal durch den IPSec-Sicherheitstunnel umfasst:
Klassifizieren, durch das Paketsendeterminal, des zu sendenden Pakets gemäß den Fünf-Tupel-Informationen und den Aushandlungsattributinformationen, als Reaktion darauf, dass das Paket den Fünf-Tupel-Informationen und den Aushandlungsattributinformationen entspricht, Zuordnen des Pakets zu einer entsprechenden Attribut-SA und Senden des Pakets an das Paketempfangsterminal durch einen IPSec-Sicherheitstunnel, der der Attribut-SA entspricht, oder als Reaktion darauf, dass das Paket den Fünf-Tupel-Informationen entspricht, aber nicht den Aushandlungsattributinformationen entspricht, Zuordnen des Pakets zu der Standard-SA und Senden des Pakets an das Paketempfangsterminal durch den IPSec-Sicherheitstunnel, der der Standard-SA entspricht.

2. Das Verfahren nach Anspruch 1, wobei die Fünf-Tupel-Informationen eine Quell-Internet-Protocol-, IP-, Adresse, eine Ziel-IP-Adresse, eine Protokollnummer, Quellportinformationen und Zielportinformationen umfassen, und die Aushandlungsattributinformationen sich auf einen Diensttyp des Pakets beziehen.

3. Das Verfahren nach Anspruch 1 oder 2, ferner umfassend: vor dem Aushandeln mit dem Paketempfangsterminal unter Verwendung der Fünf-Tupel-Informationen und der Aushandlungsattributinformationen, um den IPSec-Sicherheitstunnel zu bestimmen, Bestimmen, durch das Paketsendeterminal, eines Diensttyps in den Aushandlungsattributinformationen gemäß Identifikationsinformationen, die in dem zu sendenden Paket (401) getragen werden.

4. Das Verfahren nach Anspruch 1, wobei das Paketsendeterminal ein IPSec-Initiator ist und das Paketempfangsterminal ein IPSec-Responder ist, oder wobei das Paketsendeterminal ein IPSec-Responder ist und das Paketempfangsterminal ein IPSec-Initiator ist.

5. Ein Übertragungsverfahren, umfassend: Aushandeln, durch ein Paketempfangsterminal, mit einem Paketsendeterminal entsprechend Fünf-Tupel-Informationen und Aushandlungsattributinformationen, die von dem Paketsendeterminal gesendet werden, um einen IPSec-Sicherheitstunnel (1201) zu bestimmen, und Empfangen, durch das Paketempfangsterminal, eines von dem Paketsendeterminal durch den IPSec-Sicherheitstunnel (1202) gesendeten Pakets, **dadurch gekennzeichnet, dass** das Aushandeln mit dem Paketsendeterminal entsprechend den Fünf- Tupel-Informationen und den Aushandlungsattributinformationen, um den IPSec-Sicherheitstunnel zu bestimmen, umfasst: Aushandeln, durch das Paketempfangsterminal, mit dem Paketsendeterminal entsprechend den Fünf-Tupel-Informationen, um eine Standard-Sicherheitsassoziation, SA, zu bestimmen, die einem IPSec-Sicherheitstunnel entspricht, und Aushandeln, durch das Paketempfangsterminal, mit dem Paketsendeterminal entsprechend den Fünf-Tupel-Informationen und den Aushandlungsattributinformationen, um eine oder mehrere Attribut-SAs zu bestimmen, von denen jede einem IPSec-Sicherheitstunnel entspricht, wobei das Empfangen des von dem Paketsendeterminal durch den IPSec-Sicherheitstunnel gesendeten Pakets umfasst: als Reaktion darauf, dass das Paket den Fünf-Tupel-Informationen und den Aushandlungsattributinformationen entspricht, Zuordnen des Pakets zu einer entsprechenden Attribut-SA und Empfangen des von dem Paketsendeterminal durch einen IPSec-Sicherheitstunnel gesendeten Pakets, der der Attribut-SA entspricht, oder als Reaktion darauf, dass das Paket den Fünf-Tupel-Informationen entspricht, aber nicht den Aushandlungsattributinformationen entspricht, Zuordnen des Pakets zu der Standard-SA und Empfangen des von dem Paketsendeterminal durch den IPSec-Sicherheitstunnel gesendeten Pakets, der der Standard-SA entspricht.

6. Das Verfahren nach Anspruch 5, wobei die Fünf-Tupel-Informationen eine Quell-IP-Adresse, eine Ziel-IP-Adresse, eine Protokollnummer, Quellportinformationen und Zielportinformationen umfassen, und die Aushandlungsattributinformationen sich auf einen Diensttyp beziehen.

7. Eine Übertragungsvorrichtung, umfassend: ein erstes Aushandlungsmodul (1401), das dazu konfiguriert ist, mit einem Paketempfangsterminal unter Verwendung von Fünf- Tupel-Informationen und Aushandlungsattributinformationen zu verhandeln, um einen IPSec-Sicherheitstunnel zu bestimmen, und ein Sendemodul (1402), das dazu konfiguriert ist, ein Paket an das Paketempfangsterminal durch den IPSec-Sicherheitstunnel zu senden, **dadurch gekennzeichnet, dass** das erste Aushandlungsmodul (1401) dazu konfiguriert ist, mit dem Paketempfangsterminal unter Verwendung der Fünf-Tupel-Informationen zu verhandeln, um eine Standard-Sicherheitsassoziation, SA, zu bestimmen, die einem IPSec-Sicherheitstunnel entspricht, und mit dem Paketempfangsterminal unter Verwendung der Fünf-Tupel-Informationen und der Aushandlungsattributinformationen zu verhandeln, um eine oder mehrere Attribut-SAs zu bestimmen, von denen jede einem IPSec-Sicherheitstunnel entspricht, das Sendemodul (1402) dazu konfiguriert ist, das zu sendende Paket gemäß den Fünf-Tupel-Informationen und den Aushandlungsattributinformationen zu klassifizieren, als Reaktion darauf, dass das Paket den Fünf-Tupel-Informationen und den Aushandlungsattributinformationen entspricht, das Paket einer entsprechenden Attribut-SA zuzuordnen und das Paket an das Paketempfangsterminal durch einen IPSec-Sicherheitstunnel zu senden, der der Attribut-SA entspricht, oder als Reaktion darauf, dass das Paket den Fünf-Tupel-Informationen entspricht, aber nicht den Aushandlungsattributinformationen entspricht, das Paket der Standard-SA zuzuordnen und das Paket an das Paketempfangsterminal durch den IPSec-Sicherheitstunnel zu senden, der der Standard-SA entspricht.

8. Eine Übertragungsvorrichtung, umfassend: ein zweites Aushandlungsmodul (1501), das dazu konfiguriert ist, mit einem Paketsendeterminal entsprechend Fünf-Tupel-Informationen und Aushandlungsattributinformationen zu verhandeln, die von dem Paketsendeterminal gesendet werden, um einen IPSec-Sicherheitstunnel zu bestimmen, und ein Empfangsmodul (1502), das dazu konfiguriert ist, ein von dem Paketsendeterminal durch den IPSec-Sicherheitstunnel gesendetes Paket zu empfangen, **dadurch gekennzeichnet, dass** das zweite Aushandlungsmodul (1501) dazu konfiguriert ist, mit dem Paketsendeterminal entsprechend den Fünf-Tupel-Informationen zu verhandeln, um eine Standard-Sicherheitsassoziation, SA, zu bestimmen, die einem IPSec-Sicherheitstunnel entspricht, und mit dem Paketsendeterminal entsprechend den Fünf-Tupel-Informationen und den Aushandlungsattributinformationen zu verhandeln, um eine oder mehrere Attribut-SAs zu bestimmen, von denen jede einem IPSec-Sicherheitstunnel entspricht, das Empfangsmodul (1502) dazu konfiguriert ist, als Reaktion darauf, dass das Paket den Fünf-Tupel-Informationen und den Aushandlungsattributinformationen entspricht, das Paket einer entsprechenden Attribut-SA zuzuordnen und das von dem Paketsendeterminal durch einen IPSec-Sicherheitstunnel gesendete Paket zu empfangen, der der Attribut-SA entspricht, oder als Reaktion darauf, dass das Paket den Fünf-Tupel-Informationen entspricht, aber nicht den Aushandlungsattributinformationen entspricht, das Paket der Standard-SA zuzuordnen und das von dem Paketsendeterminal durch den IPSec-Sicherheitstunnel gesendete Paket zu empfangen, der der Standard-SA entspricht.

9. Ein Paketsendeterminal, umfassend einen Speicher (1601), einen Prozessor (1602) und ein Computerprogramm (1603), das auf dem Speicher (1601) gespeichert ist und auf dem Prozessor (1602) ausführbar ist, wobei der Prozessor (1602) bei Ausführung des Programms (1603) das Übertragungsverfahren nach einem der Ansprüche 1 bis 4 ausführt.

10. Ein Paketempfangsterminal, umfassend einen Speicher (1701), einen Prozessor (1702) und ein Computerprogramm (1703), das auf dem Speicher (1701) gespeichert ist und auf dem Prozessor (1702) ausführbar ist, wobei der Prozessor (1702) bei Ausführung des Programms (1703) das Übertragungsverfahren nach Anspruch 5 oder 6 ausführt.

11. Ein computerlesbares Speichermedium, auf dem eine computerausführbare Anweisung gespeichert ist, wobei die computerausführbare Anweisung dazu konfiguriert ist, das Übertragungsverfahren nach einem der Ansprüche 1 bis 6 auszuführen.

## Revendications

1. Un procédé de transmission, comprenant : négocier, par un terminal d'émission de paquets, avec un terminal de réception de paquets au moyen d'informations de quintuplet et d'informations d'attribut de négociation pour déterminer un tunnel de sécurité Internet Protocol Security, IPSec (301), et envoyer, par le terminal d'émission de paquets, un paquet au terminal de réception de paquets par le tunnel de sécurité IPSec (302), **caractérisé en ce que** le fait de négocier avec le terminal de réception de paquets au moyen des informations de quintuplet et des informations d'attribut de négociation pour déterminer le tunnel de sécurité IPSec comprend : négocier, par le terminal d'émission de paquets, avec le terminal de réception de paquets au moyen des informations de quintuplet pour déterminer une association de sécurité par défaut, SA, qui correspond à un tunnel de sécurité IPSec (501), et négocier, par le terminal d'émission de paquets, avec le terminal de réception de paquets au moyen des informations de quintuplet et des informations d'attribut de négociation pour déterminer une ou plusieurs SA d'attribut, chacune correspondant à un tunnel de sécurité IPSec (502), le fait d'envoyer le paquet au terminal de réception de paquets par le tunnel de sécurité IPSec comprenant : classer, par le terminal d'émission de paquets, le paquet devant être envoyé selon les informations de quintuplet et les informations d'attribut de négociation, en réponse au fait que le paquet correspond aux informations de quintuplet et aux informations d'attribut de négociation, associer le paquet à une SA d'attribut correspondante et envoyer le paquet au terminal de réception de paquets par un tunnel de sécurité IPSec correspondant à la SA d'attribut, ou en réponse au fait que le paquet correspond aux informations de quintuplet mais ne correspond pas aux informations d'attribut de négociation, associer le paquet à la SA par défaut et envoyer le paquet au terminal de réception de paquets par le tunnel de sécurité IPSec correspondant à la SA par défaut.

2. Le procédé selon la revendication 1, les informations de quintuplet comprenant une adresse de protocole Internet, IP, source, une adresse IP de destination, un numéro de protocole, des informations de port source et des informations de port de destination, et les informations d'attribut de négociation étant relatives à un type de service du paquet.

3. Le procédé selon la revendication 1 ou 2, comprenant en outre : avant de négocier avec le terminal de réception de paquets au moyen des informations de quintuplet et des informations d'attribut de négociation pour déterminer le tunnel de sécurité IPSec, déterminer, par le terminal d'émission de paquets, un type de service dans les informations d'attribut de négociation en fonction d'informations d'identification transportées dans le paquet devant être envoyé (401).

4. Le procédé selon la revendication 1, le terminal d'émission de paquets étant un initiateur IPSec, et le terminal de réception de paquets étant un répondeur IPSec, ou le terminal d'émission de paquets étant un répondeur IPSec, et le terminal de réception de paquets étant un initiateur IPSec.

5. Un procédé de transmission, comprenant : négocier, par un terminal de réception de paquets, avec un terminal d'émission de paquets selon des informations de quintuplet et des informations d'attribut de négociation envoyées par le terminal d'émission de paquets pour déterminer un tunnel de sécurité IPSec (1201), et recevoir, par le terminal de réception de paquets, un paquet envoyé par le terminal d'émission de paquets par le tunnel de sécurité IPSec (1202), **caractérisé en ce que** le fait de négocier avec le terminal d'émission de paquets selon les informations de quintuplet et les informations d'attribut de négociation pour déterminer le tunnel de sécurité IPSec comprend : négocier, par le terminal de réception de paquets, avec le terminal d'émission de paquets selon les informations de quintuplet pour déterminer une association de sécurité par défaut, SA, qui correspond à un tunnel de sécurité IPSec, et négocier, par le terminal de réception de paquets, avec le terminal d'émission de paquets selon les informations de quintuplet et les informations d'attribut de négociation pour déterminer une ou plusieurs SA d'attribut, chacune correspondant à un tunnel de sécurité IPSec, le fait de recevoir le paquet envoyé par le terminal d'émission de paquets par le tunnel de sécurité IPSec comprenant : en réponse au fait que le paquet correspond aux informations de quintuplet et aux informations d'attribut de négociation, associer le paquet à une SA d'attribut correspondante et recevoir le paquet envoyé par le terminal d'émission de paquets par un tunnel de sécurité IPSec correspondant à la SA d'attribut, ou en réponse au fait que le paquet correspond aux informations de quintuplet mais ne correspond pas aux informations d'attribut de négociation, associer le paquet à la SA par défaut et recevoir le paquet envoyé par le terminal d'émission de paquets par le tunnel de sécurité IPSec correspondant à la SA par défaut.

6. Le procédé selon la revendication 5, les informations de quintuplet comprenant une adresse IP source, une adresse IP de destination, un numéro de protocole, des informations de port source et des informations de port de destination, et les informations d'attribut de négociation étant relatives à un type de service.

7. Un dispositif de transmission, comprenant : un premier module de négociation (1401) configuré pour négocier avec un terminal de réception de paquets au moyen d'informations de quintuplet et d'informations d'attribut de négociation pour déterminer un tunnel de sécurité IPSec, et un module d'émission (1402) configuré pour envoyer un paquet au terminal de réception de paquets par le tunnel de sécurité IPSec, **caractérisé en ce que** le premier module de négociation (1401) est configuré pour négocier avec le terminal de réception de paquets au moyen des informations de quintuplet pour déterminer une association de sécurité par défaut, SA, qui correspond à un tunnel de sécurité IPSec, et pour négocier avec le terminal de réception de paquets au moyen des informations de quintuplet et des informations d'attribut de négociation pour déterminer une ou plusieurs SA d'attribut, chacune correspondant à un tunnel de sécurité IPSec, le module d'émission (1402) étant configuré pour classer le paquet devant être envoyé selon les informations de quintuplet et les informations d'attribut de négociation, en réponse au fait que le paquet correspond aux informations de quintuplet et aux informations d'attribut de négociation, associer le paquet à une SA d'attribut correspondante et envoyer le paquet au terminal de réception de paquets par un tunnel de sécurité IPSec correspondant à la SA d'attribut, ou en réponse au fait que le paquet correspond aux informations de quintuplet mais ne correspond pas aux informations d'attribut de négociation, associer le paquet à la SA par défaut et envoyer le paquet au terminal de réception de paquets par le tunnel de sécurité IPSec correspondant à la SA par défaut.

8. Un dispositif de transmission, comprenant : un second module de négociation (1501) configuré pour négocier avec un terminal d'émission de paquets selon des informations de quintuplet et des informations d'attribut de négociation envoyées par le terminal d'émission de paquets pour déterminer un tunnel de sécurité IPSec, et un module de réception (1502) configuré pour recevoir un paquet envoyé par le terminal d'émission de paquets par le tunnel de sécurité IPSec, **caractérisé en ce que** le second module de négociation (1501) est configuré pour négocier avec le terminal d'émission de paquets selon les informations de quintuplet pour déterminer une association de sécurité par défaut, SA, qui correspond à un tunnel de sécurité IPSec, et pour négocier avec le terminal d'émission de paquets selon les informations de quintuplet et les informations d'attribut de négociation pour déterminer une ou plusieurs SA d'attribut, chacune correspondant à un tunnel de sécurité IPSec, le module de réception (1502) est configuré, en réponse au fait que le paquet correspond aux informations de quintuplet et aux informations d'attribut de négociation, à associer le paquet à une SA d'attribut correspondante et à recevoir le paquet envoyé par le terminal d'émission de paquets par un tunnel de sécurité IPSec correspondant à la SA d'attribut, ou, en réponse au fait que le paquet correspond aux informations de quintuplet mais ne correspond pas aux informations d'attribut de négociation, à associer le paquet à la SA par défaut et à recevoir le paquet envoyé par le terminal d'émission de paquets par le tunnel de sécurité IPSec correspondant à la SA par défaut.

9. Un terminal d'émission de paquets, comprenant une mémoire (1601), un processeur (1602) et un programme informatique (1603) qui est stocké sur la mémoire (1601) et est apte à s'exécuter sur le processeur (1602), le processeur (1602) mettant en œuvre le procédé de transmission selon l'une quelconque des revendications 1 à 4 lors de l'exécution du programme (1603).

10. Un terminal de réception de paquets, comprenant une mémoire (1701), un processeur (1702) et un programme informatique (1703) qui est stocké sur la mémoire (1701) et est apte à s'exécuter sur le processeur (1702), le processeur (1702) mettant en œuvre le procédé de transmission selon la revendication 5 ou 6 lors de l'exécution du programme (1703).

11. Un support de stockage lisible par ordinateur portant une instruction exécutable par ordinateur stockée dessus, l'instruction exécutable par ordinateur étant configurée pour mettre en œuvre le procédé de transmission selon l'une quelconque des revendications 1 à 6.
